# EUROPEAN PATENT APPLICATION

(11) **EP 4 092 851 A1**
(43) Date of publication of application: **23.11.2022**
(21) Application number: 22173406.4
(22) Date of filing: 16.05.2022
(51) Int. Cl.: H02G 3/04, F16L 3/23, F16L 3/26

(54) **A HOLDER FOR RETAINING OR GUIDING ELECTRIC WIRING**

(30) Priority: 17.05.2021 EP 21174090
(71) Applicant: Signify Holding B.V., 5656 AE Eindhoven (NL)
(72) Inventor: WASYLUK, Jacek, Piotr, 5656 AE Eindhoven (NL)
(74) Representative: Pet, Robert Jacob

(57) **Abstract**

A holder for retaining or guiding electric wiring comprising an elongated flat, strip-like base part made from a flexible material, and multiple wiring retaining elements projecting from the base part and defining at least one cable retaining channel, the at least one cable retaining channel having opposite longitudinal channel sides, wherein for each cable retaining channel, the respective multiple wiring retaining elements project alternatingly from each longitudinal channel side of the cable retaining channel, and multiple wiring retaining elements project from one longitudinal channel side towards the corresponding longitudinal channel side in a direction transverse to a longitudinal direction of the base part. Thus, herewith electric wiring is properly retained and is prevented from undesirable bending.

## Description

### TECHNICAL FIELD

The disclosure relates to a holder for retaining or guiding electric wiring or cables for electric appliances, for example electric wiring in fixtures of illumination devices.

### BACKGROUND OF THE DISCLOSURE

Holders for retaining or guiding electric wiring or cable for electric appliances are commonly known. In a particular application, electric wiring are present in a frame or fixture of an illumination device providing electric power to light emitting devices mounted in a cover, the latter being mounted to the frame or fixture. During mounting, maintenance, etc. covers are often opened and closed, risking undesirable bending of the wiring and damage.

It is thus desirable to provide for a holder for retaining or guiding electric wiring or cable for electric appliances, which prevents undesirable bending and damage of the wiring.

### SUMMARY OF THE DISCLOSURE

The invention is set out in the appended set of claims. Accordingly, A holder for retaining or guiding electric wiring and comprising an elongated flat, strip-like base part extending along a centre axis, and made from a flexible material, and multiple retaining element supports projecting from the base part and being arranged along the centre axis next to each other, each retaining element support being provided with first and second inner wiring retaining elements extending in a transverse direction with respect to the centre axis towards first and second outer wiring retaining elements provided at respective first and second longitudinal outer channel sides thus defining a first and a second cable retaining channel, wherein for each cable retaining channel, the respective associated inner wiring retaining elements provided at respectively a first and second longitudinal inner channel side project alternatingly with respective associated outer wiring retaining elements over the respective associated cable retaining channel. Thus, the advantage is obtained that herewith electric wiring is properly retained and is prevented from undesirable bending, and the first and second cable retaining channel are adjacent and mutually parallel and share a central channel wall formed by the retaining element supports and located at and projecting from the base part, preferably at a centre axis thereof. Thus, the further advantage is obtained that in this configuration separate electric wirings can be accommodated by the holder, without the risk of entanglement. This configuration also allows for separating low voltage (control) cables from high voltage (mains) cables or data cables, e.g. for interne and/or control signals, thus reducing electromagnetic compatibility (EMC) interferences. As such, next to an improved retaining of the electric wiring with no risk of escaping, the absence of entanglement also allows a simple replacement of one electric wiring whereas the other electric wiring can remain installed..

The holder may have the feature that essentially each retaining element support with its first and second inner wire retaining element form a T-shape, wherein the inner wire retaining elements extend essentially parallel to the base part at an angle α with respect to the outer wall, wherein 45° <= α <= 90°. An angled position of the retaining arms with respect to the outer wall facilitates desired insertion and/or removal of cables from the channel in a preferred elongated direction.

The holder may have the feature that the inner retaining elements extend essentially parallel to the base part in mutually opposite directions and α = 90°. Desired insertion and/or removal of cables from the channel is then essentially the same in the elongated direction and the opposite elongated direction.

The holder may have the feature that the base part defines a plane P and wherein each outer wiring retaining element comprises a respective end portion, wherein said end portion extend only in a transverse direction and at an angle ß with respect to plane P, wherein 60° <= ß <= 90°. Said angled orientation of said end portion (or retaining arm) facilitates insertion of the cable into the channel and enhances retaining of the cable in the channel.

The holder may have the feature that the first and the second channel have a width W in transverse direction and wherein the inner retaining arms span over at least 75% of said width W, preferably at least 90%, more preferably at least 95%, such as 100%.

In an example, the multiple wiring retaining elements extend till a centre axis of the base part. Accordingly, electric wiring can be placed properly between the wiring retaining elements without the risk of escaping from the holder. Furthermore, this example is in particular useful for retaining so-called ribbon cables.

In yet a further example, achieving an improved retaining of the electric wiring with no risk of escaping, the multiple wiring retaining elements extend beyond a centre axis of the base part.

In order to facilitate the handling of the holder, it may comprise means for fixating the holder to a support surface, for example a fixture of an illumination device. In an example, the fixating means comprise at least one mounting opening structured to accommodate a fixating pin or fixating screw, the latter being screwed or otherwise being mounted with the support surface. In yet another advantageous example, the fixating means comprise at least one fixating pin projecting from the base part and structured to be mounted in a mounting hole present the support surface.

To facilitate the guiding and powering of the electric wiring, the holder may implement engaging means structured to accommodate a terminal block or a wiring connector. For example, the engaging means may incorporate a snap or click connection that interact with the housing of the terminal block or the wiring connector. This facilitates the placement and the removal of such terminal block or wiring connector for example when the electric wiring needs replacement.

### BRIEF DESCRIPTION OF THE DRAWINGS

The disclosure will now be discussed with reference to the drawings, which show in:
Figs. 1a-1e schematically illustrate various views of an example of an embodiment of a holder for retaining or guiding electric wiring not according to the present disclosure;
Figs. 2a-2d various views of another example of a holder for retaining or guiding electric wiring according to the present disclosure;
Figs. 3a-3c further details of a holder for retaining or guiding electric wiring according to the present disclosure.

### DETAILED DESCRIPTION OF THE DRAWINGS

For a proper understanding of the disclosure, in the detailed description below corresponding elements or parts of the disclosure will be denoted with identical reference numerals in the drawings.

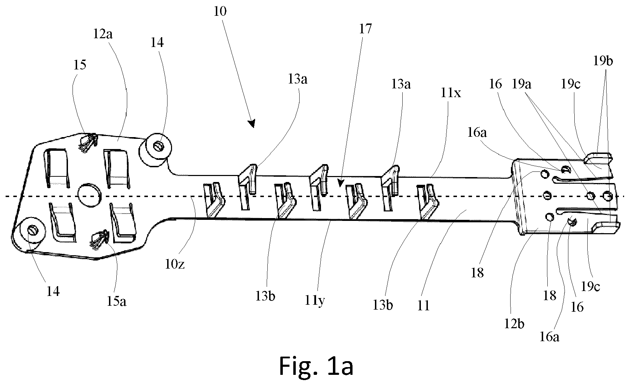

Figures 1a-1e depicts schematically various views of an example of an embodiment of a holder 10 for retaining or guiding electric wiring 21a-21b for illustrative purposes and not according to the present invention.

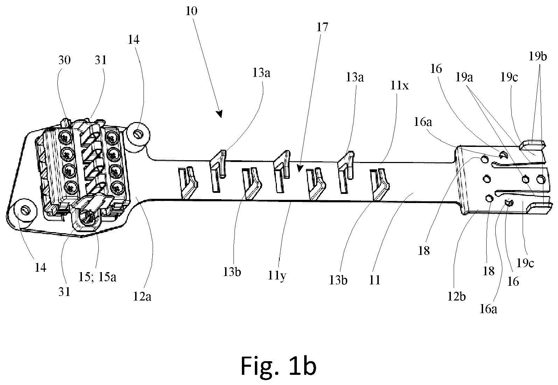

The holder 10 has an elongated form with a longitudinal direction or centre axis 10z. The elongated holder 10 is in a preferred example manufactured as an one-piece component made from a flexible material, such as PA or PP (polyamide, polypropylene). The flexible material allows the holder 10 to bend, as shown in Figure 1b. The flexible material of the holder 10 ascertains that the electric wiring, e.g. wiring harnesses or ribbon cables 21a-21b, can be guided via bends within the confined space of e.g. a fixture of an illumination device without the risk of damage or rupture of the electric wiring / wiring harness / ribbon cable 21a-21b.

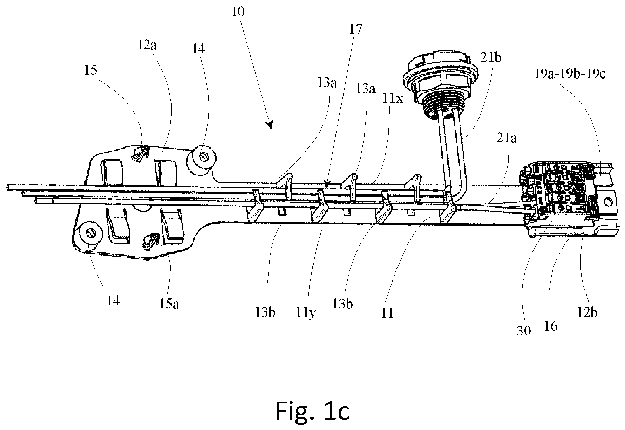

The flexible holder 10 has an elongated flat, strip-like base part 11 having first and second longitudinal sides 11x-11y as well as a first base part end 12a and a second, opposite base part end 12b. From the elongated flat, strip-like base part 11 multiple wiring retaining elements 13a-13b project, thereby forming a cable retaining channel 17. The cable retaining channel 17 serves to accommodate the electric wiring, e.g. wiring harnesses or ribbon cables 21a-21b, as shown in Figure 1c.

The cable retaining channel 17 is defined by first and second longitudinal channel sides 11x-11y. As in this embodiment the flexible holder 10 has only one cable retaining channel 17 the longitudinal channel sides coincide with the longitudinal sides 11x-11y of the elongated flat, strip-like base part 11. The multiple wiring retaining elements 13a-13b project from either longitudinal channel side in a direction transverse to the longitudinal direction 10z of the base part 11. As depicted in Figure 1a, the wiring retaining elements 13a project from the first longitudinal side 11x of the base part 11, whereas the wiring retaining elements 13b project from the second, opposite longitudinal side 11y thereof.

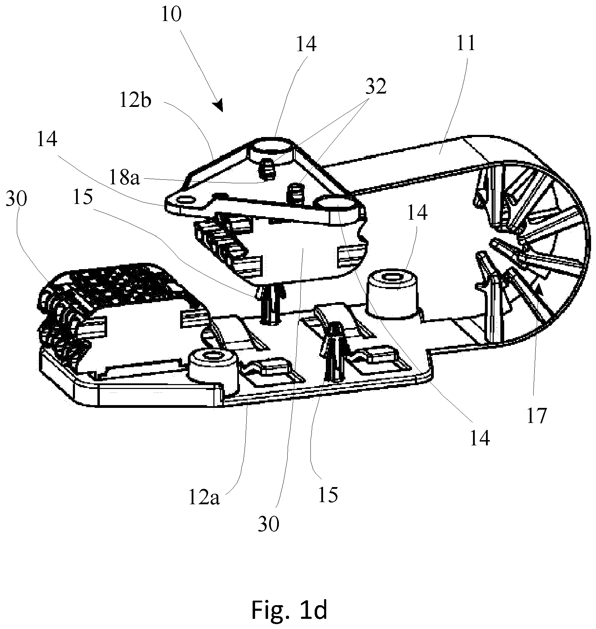

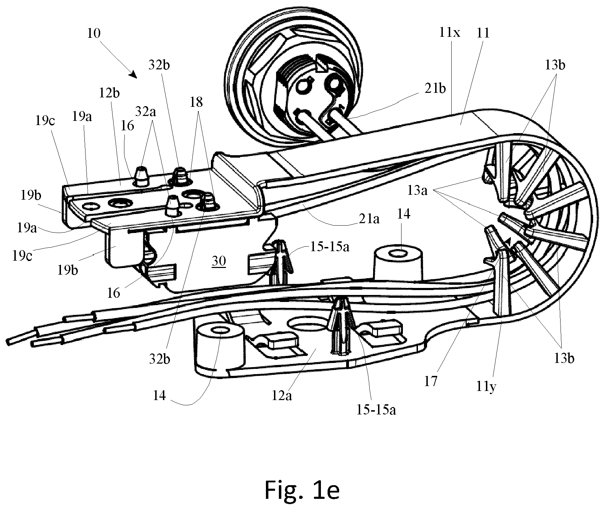

In particular, in this embodiment, the multiple wiring retaining elements 13a-13b project alternatingly from their respective longitudinal sides 11x and 11y respectively of the base part 11. The alternating orientation of the wiring retaining elements 13a-13b projecting from their respective longitudinal sides 11x and 11y allows for an easy mounting or application of the electric wiring / wiring harness / ribbon cable 21a-21b between the wiring retaining elements 13a-13b, thus ascertaining a proper retaining and prevention against damage and undesirable bending (see Figures 1c, 1d and 1e).

In an example (not shown), the multiple wiring retaining elements 13a-13b extend only till a centre axis of the base part. Accordingly, electric wiring / wiring harness / ribbon cable 21a-21b, in particular wiring harnesses or ribbon cables having significant volumetric outer dimensions, can be properly accommodated between the alternating wiring retaining elements 13a-13b without the risk of escaping from the holder 10.

In another example, as shown in Figures 1a-1e, the multiple wiring retaining elements 13a-13b each extend beyond the centre axis 10z of the base part 11. In other words, when viewing the base part 11 from above as shown in Figure 1a, the alternating wiring retaining elements 13a-13b overlap the free ends of their immediate neighbouring wiring retaining element. This configuration of overlapping wiring retaining elements 13a-13b extending beyond the centre axis 10z of the base plate 11 / the holder 10 results in an improved retention of the electric wiring / wiring harness / ribbon cable 21a-21b with no risk of escaping.

Reference numerals 14 denote fixating or mounting openings in the base part end 12a means structured for fixating the holder 10 to e.g. a support surface. The support surface can be, for example, the lower surface of a table top or an inner surface of a housing or fixture of an illumination device. The fixating means 14 facilitate the handling of the holder 10, when mounting the holder 10 in e.g. the fixture and the subsequent mounting of the electric wiring 21a-21b for retaining and guiding purposes.

In a first example, the fixating means comprise at least one mounting opening 14 (in Figure 1a two mounting openings 14 are depicted). The mounting openings 14 are structured to accommodate a fixating pin or fixating screw (not shown). Such fixating pin or fixating screw can be pinned or screwed in the support surface of the fixture or table top, etc.

In the other example as depicted in Figure 1a and 1b, the fixating are configured as at least one fixating pin 15, which projects from the base part 11. Such fixating pin 15 can be provided with barbs 15a (see Figure 1a) for mounting and retention in a mounting hole (not shown) present the support surface (of the fixture or housing of the illumination device).

Alternatively as shown in Figure 1b, the fixating pin 15 projecting from the base part end 12a of the base plate 11 may interact with corresponding fixating openings 31 of the terminal block or a wiring connector 30, preferably by means of a click or snap connection using the barbs 15a.

Alternatively, to facilitate the guiding and powering of the first electric wiring / wiring harness / ribbon cable 21a within the confined inner space of a fixture, the fixating means of the holder 10 may implement engaging openings 16 and 18 present in the other end 12b of the base plate 11. The engaging openings 16 and 18 may accommodate a terminal block or a wiring connector 30 intended for electrically connecting electric wiring / wiring harness / ribbon cable 21a. For example, the engaging opening 16 may incorporate a snap or click connection formed of proper retention ridges16a that interact and lock with a corresponding locking pin 32a extending from the housing of the terminal block or the wiring connector 30. Simultaneously, engaging openings 18 receive alignment pins 32b extending the housing of the terminal block or the wiring connector 30.

The click-and-lock engagement of the engaging openings 16 with the locking pin 32a is facilitated by means of the two slits 19a, which extend from the free end of the base plate end 12b. The slits 19a form two flexible arms 19c, which can be deformed within the plane formed by the holder 10 using the deforming flanges 19b by actuation with fingers or hand of an electrician or technical specialist. Deforming the arms 19c causes the engaging openings 16 to be temporarily displaced towards each other and allow the engaging openings 16 to be aligned with and to receive corresponding locking pins 32a of the terminal block 30. Upon releasing the arms 19c, the latter with return to their initial position, locking the retention ridges16a of the engaging openings 16 with the locking pins 32a. See in detail Figure 1e.

The click-and-lock engagement facilitates the placement and the removal of such terminal block or wiring connector 30 for example when the electric wiring 21a needs replacement.

In an alternative mounting principle, either base part end 12a-12b of the base plate 11 can be provided with threaded through openings 18a through which screws 32 can be positioned for mounting the terminal block or wiring connector 30 on the ends 12a-12b, see Figure 1d.

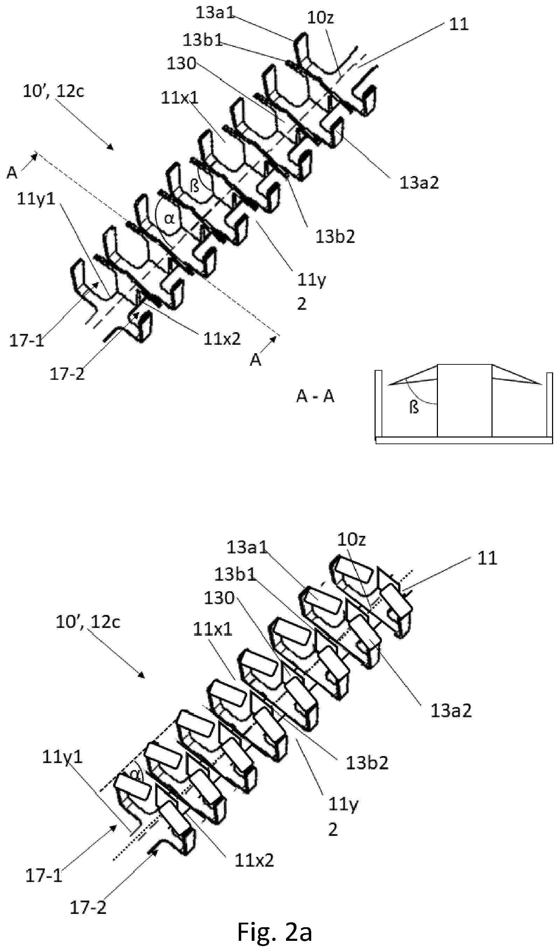

Figures 2a-2d depict embodiments of a flexible holder, here denoted with reference numeral 10' according to the invention. These embodiments are composed of an elongated flat, strip-like base part 11 extending along the centre axis 10z and having first and second longitudinal base part sides 11x-11y as well as a first base part end 12a and a second, opposite base part end 12b. Figure 2a shows in more detail the elongated flat, strip-like base part 11 which is provided with multiple retaining element supports 130. Each support 130 being provided with first 13b1 and second inner wiring retaining elements 13b2. These inner wiring retaining elements extend in a transverse direction with respect to the centre axis 10z towards first 13a1 and second outer wiring retaining elements 13a2 provided at respective first 11x1 and second longitudinal outer channel sides 11y2, which are structured to define a first and second cable retaining channels, respectively denoted with 17-1 and 17-2. More in particular. The first cable retaining channel 17-1 is defined by first outer wiring retaining elements 13a-1 and first inner wiring retaining elements 13b-1 provided at respectively a first channel inner side 11y1 and first channel outer side 11x1. The second cable retaining channel 17-2 is defined by second outer wiring retaining elements 13a-2 and second inner wiring retaining elements 13b-2 provided at respectively a second channel inner side 11x2 and second channel outer side 11y2.

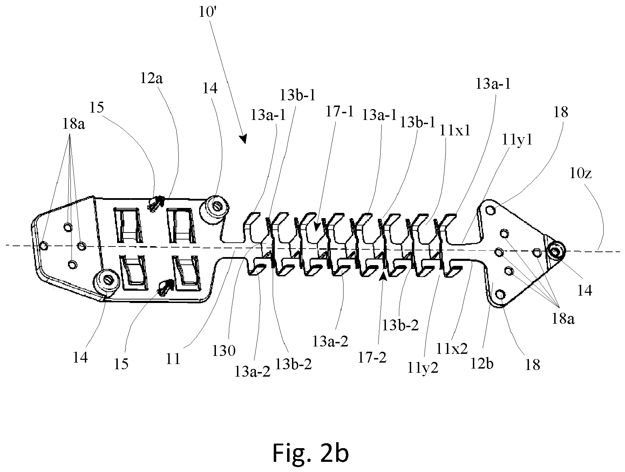

Figure 2a shows two embodiments of a central base part 12c of the holder (connecting the first base part end 12a and the second base part end 12b, see e.g. Fig. 2b) exemplifying angles α and ß for some different orientations of the inner and/or outer wire retaining elements 13a1, 13a2, 13b1, 13b2. In the cross section A-A of the figure, ß is about 70°.

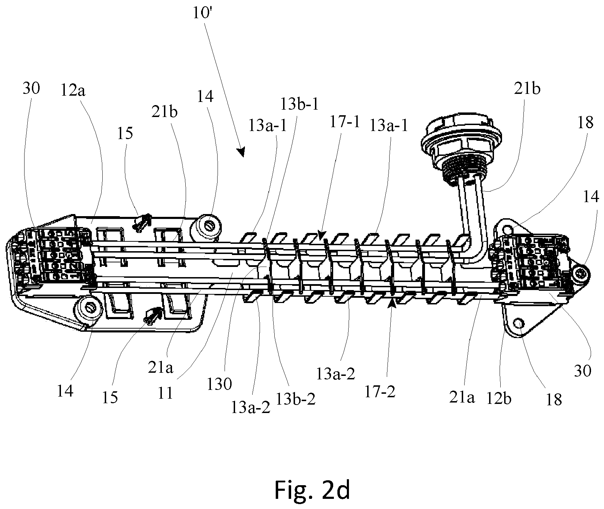

Both first and second cable retaining channels 17-1 and 17-2 are structured to accommodate separate electric wiring, e.g. separate wiring harnesses or ribbon cables 21a-21b. See Figure 2d.

Each cable retaining channel 17-1 and 17-2 respectively is defined by first and second longitudinal channel sides 11x1-11y1 and 11x2-11y2, respectively. In this embodiment the longitudinal channel side 11x1 of the first cable retaining channel 17-1 coincides with the outer longitudinal side 11x1 of the elongated flat, strip-like base part 11. Similarly, the longitudinal channel side 11y2 of the second cable retaining channel 17-2 coincides with the outer longitudinal side 11y2 of the elongated flat, strip-like base part 11. The other longitudinal channel sides 11y1 and 11x2 of either first and second cable retaining channel 17-1/17-2 coincide with each other along the centre axis 10z of the base part 11.

For each cable retaining channel 17-1 and 17-2, multiple inner wiring retaining elements 13b1 and 13b2 project from either longitudinal channel side in a direction transverse to the longitudinal direction 10z of the base part 11 towards the other longitudinal channel side of the corresponding cable retaining channel. As depicted in Figure 2b, the inner wiring retaining elements 13b1 project from the first longitudinal inner side 11y1 located at the centre axis 10z in a direction transverse to the longitudinal direction 10z towards the opposite first longitudinal outer side 11x1 of the base part 11, thus enveloping or spanning the first cable retaining channel 17-1. Similarly, the second inner wiring retaining elements 13b2 project from the second longitudinal inner side 11x2 located at the centre axis 10z in a direction transverse to the longitudinal direction 10z towards the opposite second longitudinal outer side 11y2 of the base part 11, thus enveloping or spanning the second cable retaining channel 17-2.

Likewise, for each first and second cable retaining channel 17-1/17-2, the corresponding sets of inner and outer multiple wiring retaining elements 13a1-13b1 and 13a2-13b2 project alternatingly from their respective longitudinal inner and outer sides 11x1/1 1y1 and 11x2-11y2 respectively. Similarly as in the first embodiment, the alternating orientation of the wiring retaining elements 13a1-13b1 and 13a2-13b2 projecting from their respective longitudinal sides 11x1/11y1 and 11x2-11y2 allows for an easy mounting or application of separate electric wiring / wiring harness / ribbon cables 21a-21b within each cable retaining channel 17-1/17-2, thus ascertaining a proper retaining and prevention against damage and undesirable bending.

Both inner wiring retaining elements 13b1 and 13b2 are each mounted on a retaining element support 130, which retaining element support 130 projects perpendicular from the base part 11. As shown in Figures 2a-2d, multiple retaining element supports 130 are positioned at intermediate distances from each other along the centre axis 10z. Each retaining element support 130 carries a set of inner wiring retaining elements 13b1 and 13b2 projecting in opposite direction from each other towards the opposite outer longitudinal sides 11x1 and 11y2 of the base part 11 sec. the respective first or second cable retaining channel 17-1/17-2.

Both first and second cable retaining channels 17-1 and 17-2 are thus separated from each other by means of the retaining element supports 130 carrying a set of inner wiring retaining elements 13b1 and 13b2. Accordingly, the first and second cable retaining channels 17-1 and 17-2 can accommodate separate electric wiring, e.g. separate wiring harnesses or ribbon cables 21a-21b, the separate electric wiring 21a-21b being separated or distanced from each other by means of the retaining element supports 130. This configuration allows for separating low voltage (control) cables from high voltage (mains) cables, thus reducing electromagnetic compatibility (EMC) interferences.

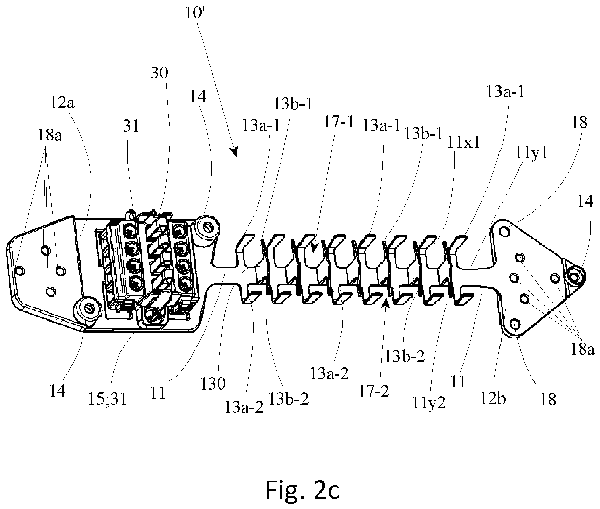

In a manner similar as in Figures 1a and 1b, fixating pins 15 projecting from the first base part end 12a of the base plate 11 may interact corresponding fixating openings 31 of the terminal block or a wiring connector 30, preferably by means of a click or snap connection using the barbs 15a, see Figures 2b, 2c and 2d. Fixating or mounting openings 14 may serve to fixate the holder 10 to a support surface. The support surface can be, for example, the lower surface of a table top or an inner surface of a housing or fixture of an illumination device.

The fixating or mounting openings 14 may have a specific geometry of the circumference of the hole, which geometry serve as an additional functionality of causing a screw being inserted through the fixating or mounting openings 14 from loosening. In particular said functionality prevents a loosening and unwanted removal of the screw when the holder 10 is removed from a support surface of the luminaire.

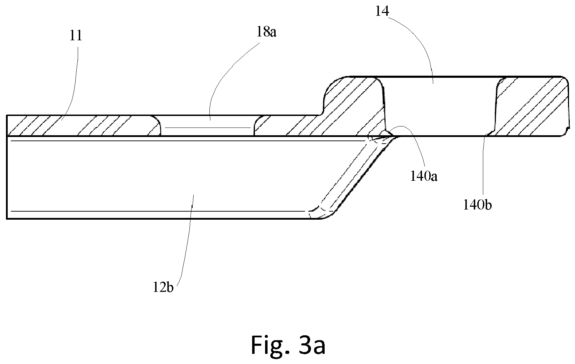

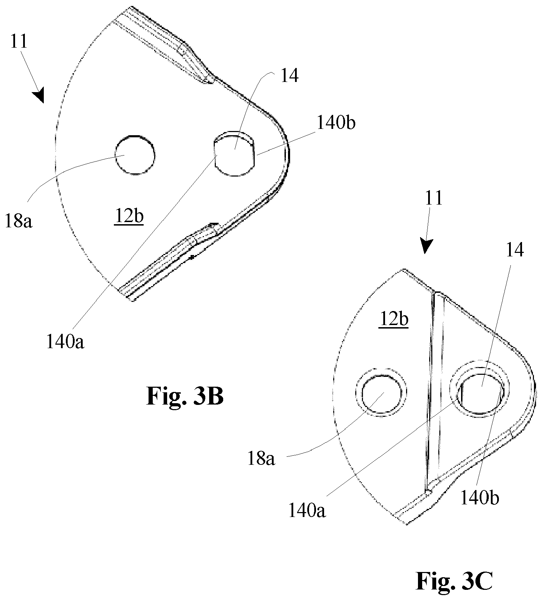

The additional functionality is shown in more detail in Figures 3a-3c, with Figure 3a depicting a cross section of the base part end 12b of the base plate 11 and Figures 3b and 3c depicting a lower top view and upper top view of the base part end 12b of the base plate 11, respectively.

The additional anti-loosening functionality consists of two inwardly extending ridges 140a-140b present in the inner circumference of the hole, which hole forms the fixating or mounting opening 14. Preferably, the two inwardly extending ridges 140a-140b are placed diametrically opposite to each other. The two inwardly extending ridges 140a-140b interact or engage with the screw thread of a screw being mounted in the fixating or mounting opening 14 and maintain the screw when the holder 10 is removed a support surface of the luminaire.

Similarly, although not depicted, the holder 10' of Figures 2b-2c-2d may implement the click-and-lock engagement formed by engaging openings 16 with a locking pin 32a of a terminal block 31, the engagement being facilitated by means of the two slits 19a forming two flexible arms 19c, which can be deformed within the plane formed by the holder 10 using the deforming flanges 19b.

Alternatively, either base part end 12a-12b of the base plate 11 can be provided with threaded through openings 18a through which screws 32 can be positioned formounting the terminal block or wiring connector 30 on the ends 12a-12b, see Figures 2b-2c-2d.

### LISTING OF REFERENCE NUMERALS USED

- 10: holder for retainer or guiding electric wires or cables (first embodiment)
- 10': holder for retainer or guiding electric wires or cables (first embodiment)
- 10z: centre axis
- 11: base part
- 11x-11y: first and second longitudinal channel side (first embodiment)
- 11x1/11y1: first outer and inner channel side of first channel
- 11x2/11y2: second inner and second outer channel side of second channel
- 12a: first base part end
- 12b: second base part end
- 12c: central base part
- 13a1-13a2: first and second outer wiring retaining elements
- 13b1-13b2: first and second inner wiring retaining elements
- 130: retaining element support
- 14: mounting openings
- 140a-140b: anti-loosening ridges
- 15: fixating pin
- 15a: barb of fixating pin
- 16: engaging openings / snap or click connection
- 16a: retention ridges
- 17: cable retaining channel (first embodiment)
- 17-1/17-2: first and second cable retaining channels (second embodiment)
- 18: alignment openings
- 18a: threaded mounting openings
- 19a: slits
- 19b: deforming flanges
- 19c: flexible arms
- 21a: first electric wiring or wiring harness or ribbon cable
- 21b: second electric wiring or wiring harness or ribbon cable
- 30: terminal block or a wiring connector
- 30': terminal block or a wiring connector

## Claims

1. A holder (10') for retaining or guiding electric wiring (21a, 21b) and comprising:
- an elongated flat, strip-like base part (11) extending along a centre axis (10z), and made from a flexible material, and
- multiple retaining element supports (130) projecting from the base part and being arranged along the centre axis next to each other, each retaining element support being provided with first and second inner wiring retaining elements (13b1, 13b2) extending in a transverse direction with respect to the centre axis towards first (13a1) and second outer wiring retaining elements (13a2) provided at respective first (11x1) and second longitudinal outer channel sides (11y2) thus defining a first (17-1) and a second cable retaining channel (17-2), wherein
for each cable retaining channel (17-1, 17-2), the respective associated inner wiring retaining elements (13b1, 13b2) provided at respectively a first (11y1) and second longitudinal inner channel side (11x2) project alternatingly with respective associated outer wiring retaining elements (13a1, 13a2) over the respective associated cable retaining channel.

2. The holder according to claim 1, wherein essentially each retaining element support with its first and second inner wire retaining element form a T-shape, wherein the inner wire retaining elements extend essentially parallel to the base part at an angle α with respect to the outer wall, wherein 45° <= α <= 90°.

3. The holder according to claim 1, wherein the inner retaining elements extend essentially parallel to the base part in mutually opposite directions and α = 90°.

4. The holder according to claim 1, 2 or 3, wherein the base part defines a plane P and wherein each outer wiring retaining element comprises a respective end portion, wherein said end portion extend only in a transverse direction and at an angle ß with respect to plane P, wherein 60° <= ß <= 90°.

5. The holder according to any one of the preceding claims, wherein the first and the second channel have a width W in transverse direction and wherein the inner retaining arms span over at least 75% of said width W, preferably at least 90%, more preferably at least 95%.

6. The holder according to any one or more of the preceding claims, further comprising means for fixating the holder to a support surface.

7. The holder according to claim 6, wherein the fixating means comprise at least one mounting opening structured to accommodate a fixating pin or fixating screw.

8. The holder according to claim 6, wherein the fixating means comprise at least one fixating pin projecting from the base part and structured to be mounted in a mounting hole present the support surface.

9. The holder according to any one or more of the preceding claims, further provided with engaging means structured to accommodate a terminal block or a wiring connector.

10. The holder according to claim 8, wherein the engaging means incorporate a snap or click connection.
